# EUROPÄISCHE PATENTSCHRIFT

(11) **EP 1 881 224 B1**
(45) Veröffentlichungstag und Bekanntmachung des Hinweises auf die Patenterteilung: **02.01.2013**
(21) Anmeldenummer: 07010602.6
(22) Anmeldetag: 29.05.2007
(51) Int. Cl.: F16D 65/12, F16D 65/847

(54) **Innenbelüftete Scheibenbremse**
Interior ventilated disc brake
Frein à disque à ventilation intérieure

(30) Priorität: 21.07.2006 DE 102006033772
(43) Veröffentlichungstag der Anmeldung: 23.01.2008
(73) Patentinhaber: Dr. Ing. h.c. F. Porsche AG, 70435 Stuttgart (DE)
(72) Erfinder: Prahst, Alexander, 71299 Wimsheim (DE)

(56) Entgegenhaltungen:
- EP-A1- 0 352 502
- DE-A1- 10 041 646
- DE-A1-102005 033 352
- DE-U1- 20 105 756
- FR-A1- 2 746 156
- JP-A- 2001 159 435
- JP-A- 2003 278 810
- US-A- 2 368 621
- US-A- 2 464 754

## Beschreibung

Die Erfindung bezieht sich auf eine innenbelüftete Scheibenbremse nach dem Oberbegriff des Anspruchs 1.

Bei Scheibenbremsen wird während des Bremsvorgangs durch die Bremsklötze in den Reibringen der Bremsscheibe Wärme erzeugt, die zur Funktionssicherheit der Scheibenbremse ständig abgeleitet werden muss. Um diesen Zweck zu erfüllen, sind beispielsweise Vorrichtungen bekannt, bei denen ein Wärmeableitelement in einem der Form eines Kühlluftkanals angepassten Formkörper angeordnet ist, der später, nach dem Herstellungsprozess der Bremsscheibe, innerhalb des Kühlluftkanals fest eingesetzt werden kann. Derartige bekannte Vorrichtungen sind jedoch sehr bauaufwendig und weisen zumeist nur ein relativ unbefriedigendes Wärmeableitverhalten auf.

Aus der FR 2 746 156 A1 ist eine innenbelüftete Scheibenbremse mit einer aus zwei Reibringen bestehenden Bremsscheibe bekannt, die über Rippen in einem Abstand zueinander angeordnet sind, und zwischen denen mehrere Kühlluftkanäle gebildet werden, wobei zwischen den Reibringen wenigstens ein Wärmeableitelement angeordnet ist. Das Wärmeableitelement ist hierbei als einwandiges Bauteil ausgebildet.

Aufgabe der Erfindung ist es, eine innenbelüftete Scheibenbremse zu schaffen, die eine verbesserte Wärmeabfuhr von der Bremsscheibe bei gleichzeitiger einfacher, kostengünstiger Bauweise ermöglicht.

Diese Aufgabe wird erfindungsgemäß durch die kennzeichnenden Merkmale des Anspruchs 1 gelöst. Weitere vorteilhafte Merkmale der Erfindung beinhalten die Unteransprüche.

Der Erfindung liegt die Erkenntnis zugrunde, dass bei vorhandenem Luftdurchsatz die Bremsscheiben-Innenkühlung verstärkt werden kann, wenn die luftberührte Oberfläche der Kühlluftkanäle vergrößert wird. Während des Herstellungsprozesses einer innenbelüfteten Scheibenbremse wird zumindest ein in die Bremsscheibe einzugießendes bzw. einzuformendes Wärmeableitelement in einem die Bremsscheibe bildenden Formkörper angeordnet. Das in der Trennebene bzw. Mittenebene des Formkörpers angeordnete und zumindest bereichsweise in den Formkörper eingegossene Wärmeableitelement sorgt dafür, dass die an den Reibringen erzeugte Reibungswärme an das Wärmeableitelement abgegeben bzw. übertragen und von dort mit der Kühlluft abtransportiert werden kann. Das Wärmeableitelement kann so im Formkörper angeordnet sein, dass es dabei zumindest bereichsweise in zumindest einen Kühlluftkanal der Bremsscheibe hineinragt. Es ist jedoch als vorteilhaft anzusehen, wenn das Wärmeableitelement so ausgebildet bzw. im Formkörper angeordnet ist, dass das Wärmeableitelement nach dem Herstellungsprozess der Bremsscheibe in eine Vielzahl bzw. in die gesamten an der Bremsscheibe gebildeten Kühlluftkanäle hineinragt.

Aufgrund des frühzeitigen Einfügens bzw. Einformens des Wärmeableitelements in den Formkörper, schon während des Gießvorgangs bzw. Herstellungsprozesses der Bremsscheibe, kann eine besonders einfache und kostengünstige und dabei äußerst effektive Ausführungsform einer mit einem Wärmeableitelement versehenen Bremsscheibe realisiert werden. Die Herstellung des Formkörpers mit integriertem Wärmeableitelement erfolgt in einem einzigen Formprozess, ohne dass spätere Nachbearbeitungen am Wärmeableitelement selber notwendig sind. Die Anordnung des Wärmeableitelements in der im wesentlichen parallel zu den Reibringen verlaufenden Trennebene des Formkörpers hat den Vorteil, dass das Wärmeableitelement in dieser Position einen sehr guten Wirkungsgrad entfalten kann, da die luftberührte Oberfläche der Kühlluftkanäle folglich sehr effektiv vergrößert wird. Die radiale Erstreckung des Wärmeableitelements kann sich dabei nach der radialen Erstreckung der Rippen bzw. der radialen Erstreckung der Kühlluftkanäle richten. Welche Ausgestaltung die Rippen und/oder Kühlluftkanäle selber haben spielt im Rahmen der Erfindung keine Rolle, da das Wärmeableitelement in nahezu beliebiger Art und Weise den Rippen und/oder Kühlluftkanälen angepasst werden kann. Der Begriff Trennebene bezeichnet dabei die in einem Werkzeug zur Herstellung des Formkörpers vorhandene Werkzeug-Trennebene, welche vorteilhafter Weise gleichzeitig die Mittelebene des Formkörpers ist. Bei der Herstellung des Formkörpers kann das Wärmeableitelement in diese Trennebene eingelegt und dort während des Herstellprozesses gehalten sein.

Das Wärmeableitelement ist erfindungsgemäß als doppelwandiges Bauteil ausgebildet. Eine doppelwandige Ausführungsform weist einen noch besseren Wärmeableitwert auf.

Eine Ausführungsform sieht vor, dass das Wärmeableitelement einen bevorzugt kreisringförmigen Querschnitt aufweist und im wesentlichen als scheiben- und/oder plattenförmiges Bauteil ausgebildet ist. Dies gewährleistet ein besonders einfaches und darüber hinaus besonders günstiges Herstellungsverfahren.

Bevorzugt ist vorgesehen, dass das Wärmeableitelement im Bereich der Kühlluftkanäle Materialerhebungen und/oder Materialausformungen aufweisen kann, wobei die Materialerhebungen und/oder Materialausformungen bevorzugt in der Art eines Stanz-, Press- oder Prägeverfahrens hergestellt werden können. Somit können schnell und einfach eine Vielzahl von Materialerhebungen und/oder Materialausformungen am Wärmeableitelement vorgesehen werden. Es ist jedoch auch denkbar, die Materialerhebungen als separate Bauteile auszubilden, die beispielsweise nachträglich mit der Außenseite des Wärmeableitelements verschweißt, verlötet und/oder vernietet werden können.

Bevorzugt sind die Materialerhebungen dabei noppenartig ausgebildet. Es ist jedoch auch denkbar die Materialerhebungen zapfen- oder stiftartig auszubilden. Die Materialausformungen hingegen können im Wesentlichen steg- oder laschenartig ausgebildet sein. Mit Hilfe der Materialerhebungen und/oder Materialausformungen kann ein nochmals verbessertes Wärmeableitverhalten bzw. Strömungsverhalten gegenüber glatten Bauteilen erreicht werden.

Ferner ist vorgesehen, dass das Wärmeableitelement zumindest im Bereich der an den Reibringen vorgesehenen Rippen mit Ausnehmungen und/oder Durchbrüchen versehen ist, um eine sichere und zuverlässige Verbindung der beiden Reibringe zu gewährleisten.

Die Ausnehmungen und/oder Durchbrüche sind dabei vorteilhafter Weise in Form und Anzahl im Wesentlichen den an den Reibringen vorgesehenen Rippen angepasst.

Besonders bevorzugt ist das Wärmeableitelement aus Blech hergestellt, insbesondere aus Aluminium, Stahl, Kupfer oder deren Legierungen. Ein aus Blech hergestelltes Wärmeableitelement hat einen Gewichtsvorteil, ist kostengünstig herzustellen und darüber hinaus leicht zu verarbeiten.

Eine besonders bevorzugte Ausführungsform sieht vor, dass das Wärmeableitelement eine höhere Wärmeleitfähigkeit als der Reibring beziehungsweise der Formkörper aufweist.

In der Zeichnung sind vier Ausführungsbeispiele der Erfindung dargestellt, die im folgenden näher beschrieben werden.

Es zeigen:
- Fig. 1: in schematischer Darstellung eine innenbelüftete Scheibenbremse mit einem integrierten Wärmeableitelement;
- Fig. 2: die Seitenansicht auf einen axialen äußeren Teilbereich der Scheibenbremse gem. Fig. 1;
- Fig. 3: den Ausschnitt eines Radialschnitts durch die Scheibenbremse 1 gem. Fig. 1;
- Fig. 4: die Seitenansicht auf einen axialen äußeren Teilbereich einer Scheibenbremse mit einem Wärmeableitelements;
- Fig. 5: die Seitenansicht auf einen axialen äußeren Teilbereich einer Scheibenbremse mit einer erfindungsgemäßen Ausführungsform eines Wärmeableitelements;
- Fig. 6: die Seitenansicht auf einen axialen äußeren Teilbereich einer Scheibenbremse mit einem Wärmeableitelement.

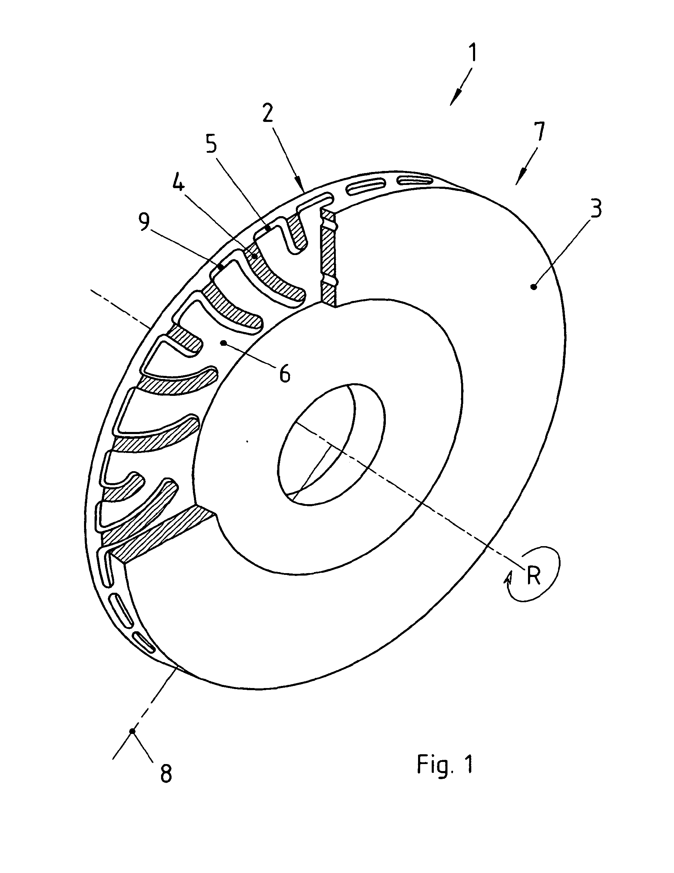

Eine innenbelüftete Scheibenbremse 1, dargestellt in Fig. 1, weist eine aus einem ersten und einem zweiten Reibring 2, 3 bestehende Bremsscheibe auf, wobei die Reibringe 2, 3 mit nicht dargestellten Bremsklötzen in an sich bekannter Weise zusammenwirken. Der erste Reibring 2 ist mit dem zweiten Reibring 3 durch mehrere Rippen 4 verbunden, zwischen denen eine Vielzahl von Kühlluftkanälen 5 gebildet ist. Bei der in Drehrichtung R rotierenden Bremsscheibe wird zwischen den Rippen 4 eine Luftströmung erzeugt, die die beim Bremsen zwischen den Bremsklötzen und den Reibringen 2, 3 der Bremsscheibe erzeugte Reibungswärme abführt, wodurch die Scheibenbremse 1 gekühlt wird.

Um den Luftdurchsatz der Bremsscheiben-Innenkühlung zu verstärken bzw. um die luftgekühlte Oberfläche der Kühlluftkanäle 5 zu vergrößern, ist in der Bremsscheibe ein Wärmeableitelement 6 angeordnet, wobei das Wärmeableitelement 6 und die Reibringe 2, 3 bzw. die Bremsscheibe einen im wesentlichen einstückigen Formkörper 7 bilden.

Das Wärmeableitelement 6 ist so im Formkörper 7 angeordnet bzw. eingegossen, dass das Wärmeableitelement 6 zumindest bereichsweise in die Kühlluftkanäle 5 der Bremsscheibe hineinragt, wobei das Wärmeableitelement 6 im wesentlichen parallel zu den Reibringen 2 und 3 in der Trenn- bzw. Mittenebene 8 des Formkörpers 7 verlaufend angeordnet ist. Das Wärmeableitelement 6 weist einen im wesentlichen kreisförmigen Querschnitt auf und ist als plattenförmiges Bauteil ausgebildet, wobei es denkbar ist, das plattenförmige Bauteil aus einem Metallblech oder dergleichen zu fertigen. Es ist auch denkbar, das Wärmeableitelement aus mehreren Einzelteilen auszubilden bzw. mehrere gleiche oder ungleiche Wärmeableitelemente in der Bremsscheibe vorzusehen, wobei die Ausführungsform des Wärmeableitelements im wesentlichen dem in der Bremsscheibe verlaufenden Kühlluftkanal angepasst sein kann. Die Wandstärke des Bauteils bzw. dessen axiale Erstreckung richtet sich bevorzugt nach der axialen Erstreckung der Kühlluftkanäle 5. Bevorzugt sollte das Wärmeableitelement 5 jedoch so ausgebildet sein, dass ein ausreichendes Strömungsverhalten zwischen den Außenwänden 9 der Kühlluftkanäle 5 und den Außenseiten des Wärmeableitelements 6 gewährleistet ist.

Das Wärmeableitelement 6 weist im Bereich der Rippen 4 Ausnehmungen bzw. Durchbrüche 10 auf, die verhindern, dass die Rippen 4 beim Herstellungs- bzw. Gießvorgang durch das Wärmeableitelement 6 getrennt werden bzw. es nur zu einem unzureichenden Formschluss zwischen den Reibringen 2 und 3 kommt. Die Ausnehmungen bzw. Durchbrüche 10 sind dabei in Form und Anzahl den an den Reibringen 2 und 3 vorgesehenen Rippen 4 bzw. den Formelementen zur Bildung der Rippen 4 während des Herstellungsprozesses angepasst und stellen eine stoffschlüssige Verbindung der Reibringe 2 und 3 einerseits und eine formschlüssige Verbindung zwischen den Rippen 4 und dem Wärmeableitelement 6 andererseits sicher.

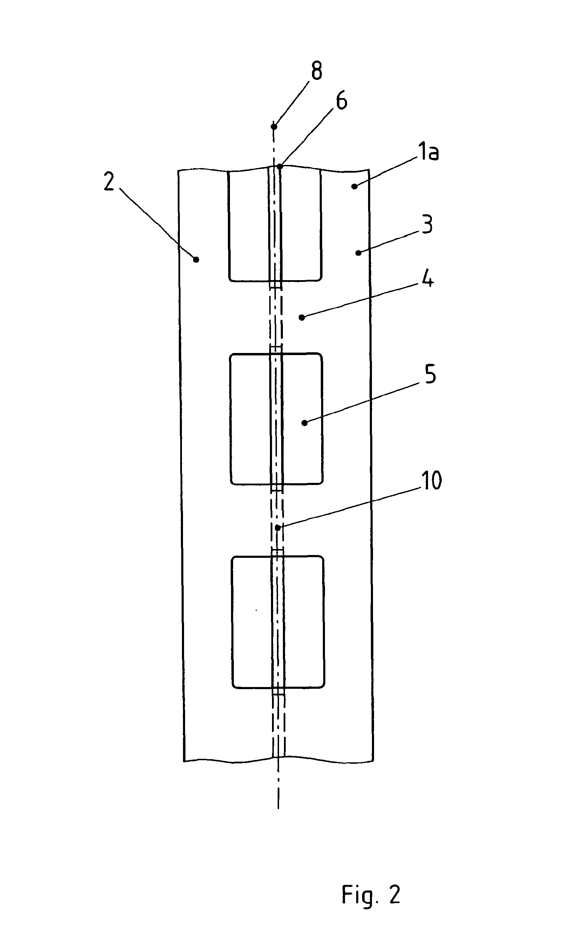

Fig. 2 zeigt die Seitenansicht auf einen axialen äußeren Teilbereich der Scheibenbremse gem. Fig. 1 in einer vergrößerten Darstellung. Zwischen der Bremsscheibe bzw. zwischen den Reibringen 2 und 3 ist das Wärmeableitelement 6 angeordnet, wobei zu erkennen ist, dass das Wärmeableitelement 6 parallel zu den Reibringen 2 und 3 in der Trennebene 8 des Formkörpers bzw. der Bremsscheibe verläuft. Das Wärmeableitelement 6 ist als einwandiges plattenförmiges Bauteil ausgebildet und weist im Bereich der Rippen 4 Durchbrüche 10 auf. Das Wärmeableitelement 6 bewirkt, dass die an der Bremsscheibe auftretende Wärme über die Reibringe 2 und 3 an das Wärmeableitelement 6 abgegeben und von dort wiederum über die durch die Kühlluftkanäle 5 strömende Kühlluft abtransportiert werden kann.

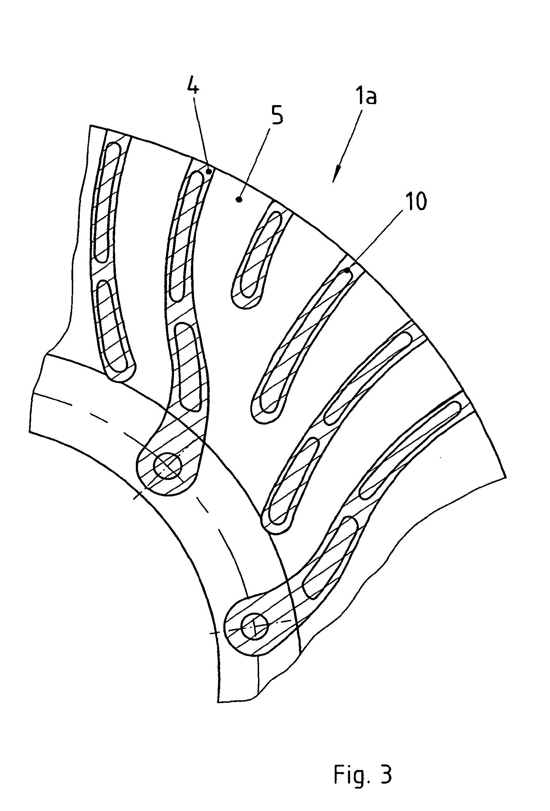

Fig. 3 zeigt in schematischer Darstellung den Ausschnitt eines Radialschnitts durch die Bremsscheibe bzw. die Scheibenbremse 1 gem. Fig. 1 mit Blick auf einen Teilumfang des Wärmeableitelements 6. Zu erkennen sind neben den Rippen 4 und den Kühlluftkanälen 5 die Durchbrüche 10 welche im Bereich der Rippen 4 vorgesehen sind. Die Durchbrüche 10 sind hier als Langloch ausgebildet und dem Verlauf bzw. der Ausgestaltung der Rippen 4 angepasst. Es wäre aber auch denkbar, die Durchbrüche und/oder Ausnehmungen beispielsweise in der Art einer Bohrung auszubilden. Die Durchbrüche und/oder Ausnehmungen selber können z.B. in das Wärmeableitelement gestanzt, gebohrt und/oder gefräst werden.

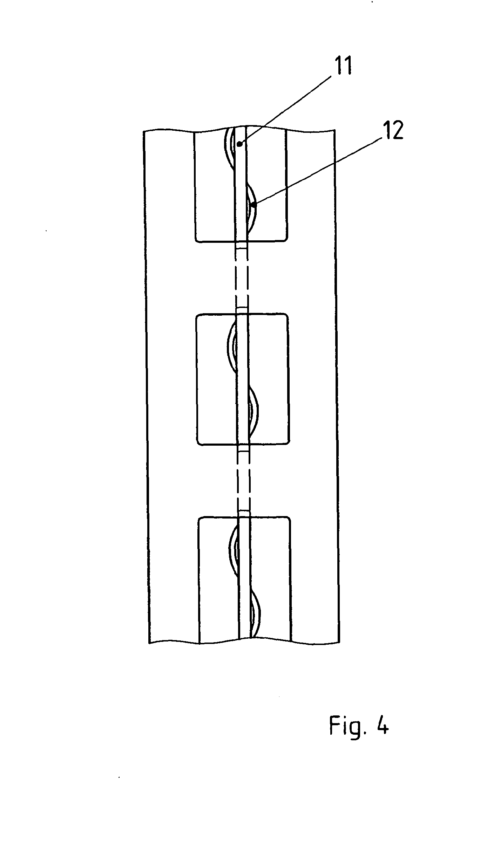

Fig. 4 zeigt ein Wärmeableitelement 11. Das Wärmeableitelement 11 weist Materialerhebungen 12 auf, wobei die Materialerhebungen 12 im Wesentlichen noppenartig ausgebildet und auf beiden Außenseiten des Wärmeableitelements 11 angeordnet sind. Die Materialerhebungen 12 können nur vereinzelt auf der radialen Außenseite des Wärmeableitelements 11 vorgesehen sein oder beidseitig, im gesamten Bereich der Kühlluftkanäle verlaufend, vollflächig über die Außenseite des Wärmeableitelements 11 verteilt, auf dieser angeordnet sein. Die Materialerhebungen 12 sind hier als aus dem eigentlichen Wärmeableitelement 11 ausgestellte Materialerhebungen ausgebildet. Es ist beispielsweise denkbar, die Materialerhebungen 12 in einem Stanz-, Press- oder Prägevorgang herzustellen, wobei auch ausgestellte Laschen 12' gebildet werden können.

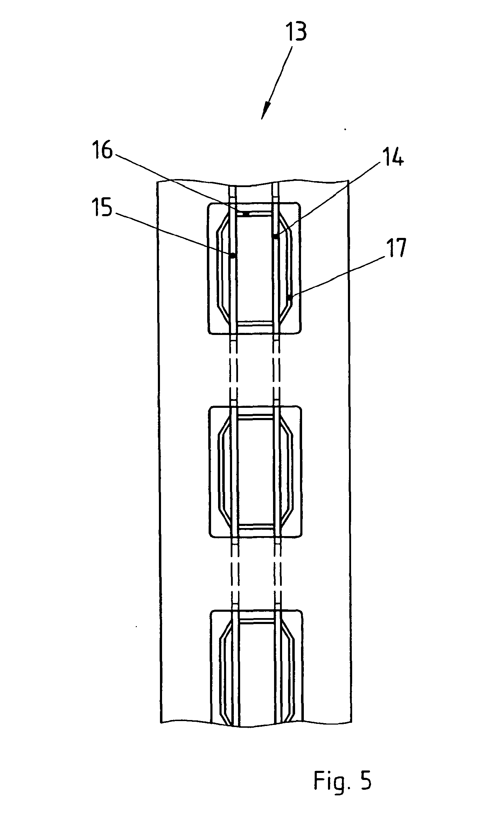

Fig. 5 zeigt ein erfindungsgemäßes Wärmeableitelement 13, wobei das Wärmeableitelement 13 hier als mehr- bzw. doppelwandiges Bauteil ausgeführt ist. Das Wärmeableitelement 13 besteht aus zwei Hauptrippen 14, 15, zwischen denen eine Vielzahl von Querstreben 16 angeordnet sind. Ferner sind am Wärmeableitelement 13 stegartige Materialausformungen 17 vorgesehen, wobei die Materialausformungen 17 im Stanz- oder Pressverfahren aus den Hauptrippen 14 und 15 ausgeformt sind. Auch hier ist denkbar, die Materialausformungen 17 als separate Bauteile nachträglich mit den Hauptrippen 14 und 15 zu verbinden. Der Vorteil dieser Ausführungsform liegt darin, dass das Wärmeableitelement 13 durch die doppelwandige Ausführungsform und die vorgesehenen Materialausformungen ein nochmals verbessertes Wärmeableitverhalten bzw. Strömungsverhalten gegenüber einwandigen Bauteilen aufweist.

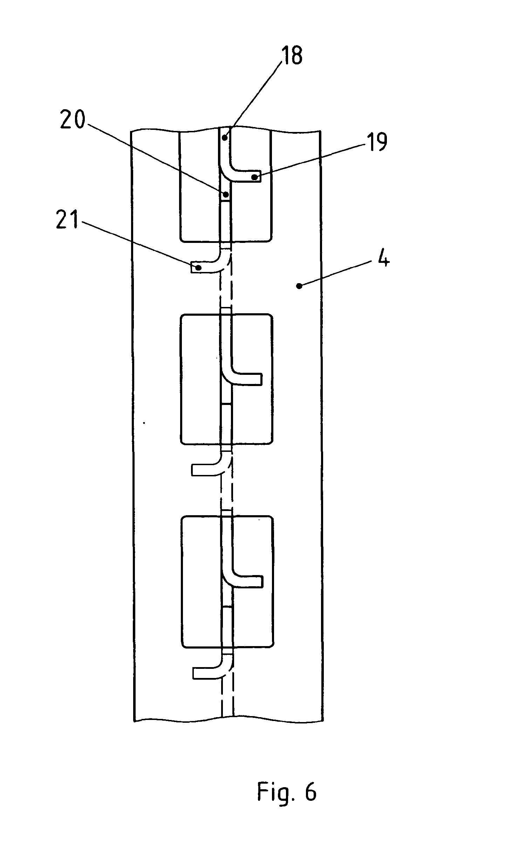

Ein Wärmeableitelement 18, dargestellt in Fig. 6, zeigt ein Wärmeableitelement 18 wiederum als einwandiges Bauteil. Das Wärmeableitelement 18 weist Materialausformungen 19 in laschen- bzw. winkelartiger Ausgestaltung auf. Die Materialausformungen 19 sind hierbei im Stanz- und/oder Biegeverfahren aus dem plattenförmigen Bauteil ausgeformt und sind im wesentlichen im 90° Winkel zu der Außenseite 20 des Wärmeableitelements 18 ausgestellt. Ferner sind am Wärmeableitelement 18 Materialausformungen 21 im Bereich der Rippen 4 vorgesehen, wobei diese Ausformungen einen verbesserten Halt im Formkörper gewährleisten sollen.

Mit Hilfe der Wärmeableitelemente, wie in den Fig. 1 bis 6 dargestellt, wird eine erhebliche Vergrößerung der inneren Oberfläche und eine Steigerung der für den Wärmeübergang maßgeblichen Luftgeschwindigkeit bzw. Luftwirbelung in den Kühlluftkanälen ermöglicht, die Grenzschichtstruktur der Luftströmung beeinflusst und infolge dessen die Wärmeübergangszahl am Wärmeableitelement bedeutend erhöht.

### Bezugszeichenliste

- 1: Innenbelüftete Scheibenbremse
- 2: Reibring
- 3: Reibring
- 4: Rippen
- 5: Kühlluftkanäle
- 6: Wärmeableitelement
- 7: Formkörper
- 8: Trennebene
- 9: Außenwand
- 10: Durchbrüche
- 11: Wärmeableitelement
- 12: Materialerhebungen
- 13: Wärmeableitelement
- 14: Hauptrippe
- 15: Hauptrippe
- 16: Querstreben
- 17: Materialausformungen
- 18: Wärmeableitelement
- 19: Materialausformungen
- 20: Außenseite
- 21: Materialausformungen

## Patentansprüche

1. Innenbelüftete Scheibenbremse (1) mit einer aus zwei Reibringen (2, 3) bestehenden Bremsscheibe, die über Rippen (4) in einem Abstand zueinander angeordnet sind, und zwischen denen mehrere Kühlluftkanäle (5) gebildet werden, wobei zwischen den Reibringen (2, 3) wenigstens ein Wärmeableitelement (13) angeordnet ist, wobei die beiden Reibringe (2, 3) und das Wärmeableitelement (13) einen im wesentlichen einstückigen Formkörper (7) bilden, dergestalt, dass das Wärmeableitelement (13) zumindest bereichsweise in den Formkörper (7) eingegossen wird, wobei das Wärmeableitelement (13) zumindest bereichsweise in zumindest einen Kühlluftkanal (5) der Bremsscheibe hineinragt, und wobei das Wärmeableitelement (13) im wesentlichen in einer parallel zu den Reibringen (2, 3) verlaufenden Trennebene (8) des Formkörpers (7) angeordnet ist, **dadurch gekennzeichnet, dass** das Wärmeableitelement (13) als doppelwandiges Bauteil ausgebildet ist, wobei das Wärmeableitelement (13) aus zwei Hauptrippen (14, 15) besteht, zwischen denen eine Vielzahl von Querstreben (16) angeordnet ist.

2. Scheibenbremse nach Anspruch 1, **dadurch gekennzeichnet, dass** das Wärmeableitelement (6, 11, 13, 18) einen bevorzugt kreisringförmigen Querschnitt aufweist und im wesentlichen als scheiben- und/oder plattenförmiges Bauteil ausgebildet ist.

3. Scheibenbremse nach einem der Ansprüche 1 oder 2, **dadurch gekennzeichnet, dass** das Wärmeableitelement (6, 11, 13, 18) im Bereich der Kühlluftkanäle (5) Materialerhebungen (12) und/oder Materialausformungen (17, 19, 21) aufweist, wobei die Materialerhebungen (12) und/oder die Materialausformungen (17, 19, 21) im Wesentlichen in einem Stanz-, Press- oder Prägeverfahren hergestellt werden.

4. Scheibenbremse nach Anspruch 3 , **dadurch gekennzeichnet, dass** die Materialerhebungen (12) im wesentlichen noppen-, zapfen- oder stiftartig ausgebildet sind.

5. Scheibenbremse nach Anspruch 3 oder 4, **dadurch gekennzeichnet, dass** die Materialausformungen (17, 19, 21) im wesentlichen steg- oder laschenartig ausgebildet sind.

6. Scheibenbremse nach einem der Ansprüche 1 bis 5, **dadurch gekennzeichnet, dass** das Wärmeableitelement (6, 11, 13, 18) zumindest im Bereich der an den Reibringen (2, 3) vorgesehenen Rippen (4) mit Ausnehmungen und/oder Durchbrüchen (10) versehen ist.

7. Scheibenbremse nach einem der Ansprüche 1 bis 6, **dadurch gekennzeichnet, dass** die Ausnehmungen und/oder Durchbrüche (10) in Form und Anzahl im wesentlichen den an den Reibringen (2, 3) vorgesehenen Rippen (4) angepasst sind.

8. Scheibenbremse nach einem der Ansprüche 1 bis 7, **dadurch gekennzeichnet, dass** das Wärmeableitelement (6, 11, 13, 18) aus Blech, insbesondere aus Aluminium, Stahl, Kupfer oder deren Legierungen besteht.

9. Scheibenbremse nach einem der Ansprüche 1 bis 8, **dadurch gekennzeichnet, dass** das Wärmeableitelement (6, 11, 13, 18) bevorzugt eine höhere Wärmeleitfähigkeit als der Reibring (2, 3) beziehungsweise der Formkörper (7) aufweist.

## Claims

1. Internally ventilated disc brake (1) having a brake disc which comprises two friction rings (2, 3) which are arranged via ribs (4) at a spacing from one another, and between which a plurality of cooling-air ducts (5) are formed, at least one heat-dissipating element (13) being arranged between the friction rings (2, 3), the two friction rings (2, 3) and the heat-dissipating element (13) forming a substantially integral shaped body (7), in such a way that the heat-dissipating element (13) is cast at least in regions into the shaped body (7), the heat-dissipating element (13) projecting at least in regions into at least one cooling-air duct (5) of the brake disc, and the heat-dissipating element (13) being arranged substantially in a dividing plane (8) of the shaped body (7), which dividing plane (8) extends parallel to the friction rings (2, 3), **characterized in that** the heat-dissipating element (13) is configured as a double-walled component, the heat-dissipating element (13) comprising two main ribs (14, 15), between which a multiplicity of transverse struts (16) are arranged.

2. Disc brake according to Claim 1, **characterized in that** the heat-dissipating element (6, 11, 13, 18) has a preferably circularly annular cross section and is configured substantially as a disc-shaped and/or plate-shaped component.

3. Disc brake according to either of Claims 1 and 2, **characterized in that** the heat-dissipating element (6, 11, 13, 18) has material elevations (12) and/or material shaped-out portions (17, 19, 21) in the region of the cooling-air ducts (5), the material elevations (12) and/or the material shaped-out portions (17, 19, 21) being produced substantially in a punching, pressing or stamping process.

4. Disc brake according to Claim 3, **characterized in that** the material elevations (12) are of substantially lug-like, journal-like or pin-like configuration.

5. Disc brake according to Claim 3 or 4, **characterized in that** the material shaped-out portions (17, 19, 21) are of substantially web-like or tongue-like configuration.

6. Disc brake according to one of Claims 1 to 5, **characterized in that** the heat-dissipating element (6, 11, 13, 18) is provided with recesses and/or apertures (10) at least in the region of the ribs (4) which are provided on the friction rings (2, 3).

7. Disc brake according to one of Claims 1 to 6, **characterized in that** the recesses and/or apertures (10) are adapted in terms of shape and number substantially to the ribs (4) which are provided on the friction rings (2, 3).

8. Disc brake according to one of Claims 1 to 7, **characterized in that** the heat-dissipating element (6, 11, 13, 18) is composed of sheet metal, in particular of aluminium, steel, copper or alloys thereof.

9. Disc brake according to one of Claims 1 to 8, **characterized in that** the heat-dissipating element (6, 11, 13, 18) preferably has a higher thermal conductivity than the friction ring (2, 3) and/or the shaped body (7).

## Revendications

1. Frein à disque (1) à ventilation intérieure comprenant un disque de frein constitué de deux bagues de friction (2, 3) qui sont disposées à distance l'une de l'autre au moyen de nervures (4) et entre lesquelles sont formés plusieurs conduits d'air de refroidissement (5), au moins un élément de dissipation thermique (13) étant disposé entre les bagues de friction (2, 3), les deux bagues de friction (2, 3) et l'élément de dissipation thermique (13) formant un corps moulé (7) essentiellement d'un seul tenant, de telle sorte que l'élément de dissipation thermique (13) est moulé au moins par endroits dans le corps moulé (7), l'élément de dissipation thermique (13) pénétrant au moins par endroits dans au moins un conduit d'air de refroidissement (5) du disque de frein et l'élément de dissipation thermique (13) étant disposé essentiellement dans un plan de séparation (8) du corps moulé (7) s'étendant parallèlement aux bagues de friction (2, 3), **caractérisé en ce que** l'élément de dissipation thermique (13) est réalisé sous forme de composant à double paroi, l'élément de dissipation thermique (13) étant constitué de deux nervures principales (14, 15) entre lesquelles est disposée une pluralité de renforts transversaux (16).

2. Frein à disque selon la revendication 1, **caractérisé en ce que** l'élément de dissipation thermique (6, 11, 13, 18) présente une section transversale de préférence en forme d'anneau circulaire et est réalisé essentiellement en tant que composant en forme de disque et/ou en forme de plaque.

3. Frein à disque selon l'une quelconque des revendications 1 et 2, **caractérisé en ce que** l'élément de dissipation thermique (6, 11, 13, 18) comprend dans la région des conduits d'air de refroidissement (5) des rehaussements de matériau (12) et/ou des protubérances de matériau (17, 19, 21), les rehaussements de matériau (12) et/ou les protubérances de matériau (17, 19, 21) étant fabriqués essentiellement selon un procédé d'estampage, de pressage ou de matriçage.

4. Frein à disque selon la revendication 3, **caractérisé en ce que** les rehaussements de matériau (12) sont réalisés essentiellement en forme de boutons, de tenons ou de chevilles.

5. Frein à disque selon la revendication 3 ou 4, **caractérisé en ce que** les protubérances de matériau (17, 19, 21) sont réalisées essentiellement sous forme de nervures ou de languettes.

6. Frein à disque selon l'une quelconque des revendications 1 à 5, **caractérisé en ce que** l'élément de dissipation thermique (6, 11, 13, 18) est pourvu, au moins dans la région des nervures (4) prévues sur les bagues de friction (2, 3), d'évidements et/ou de passages (10).

7. Frein à disque selon l'une quelconque des revendications 1 à 6, **caractérisé en ce que** les évidements et/ou passages (10) sont adaptés en forme et en nombre essentiellement aux nervures (4) prévues sur les bagues de friction (2, 3).

8. Frein à disque selon l'une quelconque des revendications 1 à 7, **caractérisé en ce que** l'élément de dissipation thermique (6, 11, 13, 18) est constitué de tôle, en particulier d'aluminium, d'acier, de cuivre ou de leurs alliages.

9. Frein à disque selon l'une quelconque des revendications 1 à 8, **caractérisé en ce que** l'élément de dissipation thermique (6, 11, 13, 18) présente de préférence une conductivité thermique plus élevée que celle de la bague de friction (2, 3) ou du corps moulé (7).
